Europäisches Patentamt

European Patent Office

Office européen des brevets

(11) Publication number: **0 145 042**
**B1**

(12) **EUROPEAN PATENT SPECIFICATION**

(45) Date of publication of patent specification: **16.08.89**

(51) Int. Cl.⁴: **C 10 G 45/60, B 01 J 37/02, C 10 G 49/02**

(21) Application number: **84201440.9**

(22) Date of filing: **09.10.84**

(54) **Hydrocarbon conversion processes and modified refractory oxides which can be used in such processes.**

(30) Priority: **14.10.83 FR 8316372**
**14.10.83 FR 8316373**

(43) Date of publication of application:
**19.06.85 Bulletin 85/25**

(45) Publication of the grant of the patent:
**16.08.89 Bulletin 89/33**

(84) Designated Contracting States:
**BE DE GB IT NL SE**

(56) References cited:
**EP-A-0 068 603**
**DE-A-3 019 582**
**FR-A-2 347 097**
**FR-A-2 372 770**
**FR-A-2 427 844**
**GB-A-1 372 189**
**US-A-2 668 866**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Neel, Emmanuel Emile Alfred**
**P.O. Box 20**
**F-76530 Grand-Couronne (FR)**
Inventor: **Lucien, Jacques Pierre**
**P.O. Box 20**
**F-76530 Grand-Couronne (FR)**
Inventor: **Levavasseur, Jacques André**
**P.O. Box 20**
**F-76530 Grand-Couronne (FR)**
Inventor: **Reinalda, Donald**
**Badhuisweg 3**
**NL-1031 CM Amsterdam (NL)**

(74) Representative: **Aalbers, Onno et al**
**P.O. Box 302**
**NL-2501 CH The Hague (NL)**

EP 0 145 042 B1

Courier Press, Leamington Spa, England.

## Description

The present invention relates to catalytic hydrocarbon conversion processes as well as to the preparation of modified refractory oxides which suitably can be used therein. The present invention relates in particular to a process for the hydroisomerization of petroleum waxes using preferably catalysts based on modified refractory oxides prepared according to the present invention, as well as to lubricating oils thus otbained.

It is known that refractory oxide supports which have been treated with metals having hydrogenating activity can be used in hydrocarbon conversion processes, for instance in a process for the production of lubricating oil wherein slack wax is isomerized through the aid of a supported platinum catalyst, as described in US—A—2,668,866, or in the hydrogenation of petroleum waxes in order to increase the light- and thermal stability of such waxes.

Although petroleum waxes can be converted into high or even extra high viscosity index lubricating oils, for which a high demand exists, considerable sacrifices have to be made with respect to the conversion rate of the petroleum waxes and unacceptably high reaction temperatures have to be used.

A process for producing modified refractory oxides is described in FR—A—2,427,844 in which process at least one ion complex of zirconium and/or titanium is deposited on a carrier of refractory oxide, which ion complex is formed with the help of at least one organic acid or salt of an organic acid. The thus modified refractory oxides are used as carrier for a hydrogenating metal in hydroconversion processes. It appeared that the hydroconversion processes in which such catalyst were used needed higher temperatures than processes using conventional catalysts.

It has now surprisingly been found that the use of certain refractory oxides treated with certain metals and certain ammonium compounds as catalysts in hydrocarbon conversion processes gives excellent results; in particular, the disadvantages referred to hereinabove with respect to the conversion of petroleum waxes and high reaction temperatures can be avoided.

The invention relates to hydrocarbon conversion processes, wherein hydrocarbons are contacted with hydrogen at hydroconversion conditions using a catalyst comprising at least one hydrogenating metal or compound thereof present on at least one refractory oxide which has been modified by impregnation with a metal compound, characterized in that the refractory oxide has been modified with from 0.1 to 30 %w, calculated on refractory oxide, of at least one metal compound of Group 2a, 3a, 4a and/or 4b of the Periodic Table of Elements capable of influencing the acidity of the refractory oxide, by impregnating the refractory oxide with a solution comprising a hydrocarbyl ammonium metallate or with at least two solutions comprising, respectively, one or more metal compounds and a hydrocarbyl ammonium hydroxide. Reference is made to the "Handbook of Chemistry and Physics", 55th edition, CRC Press, Ohio, USA (1975) for the Periodic Table of the Elements. The metals concerned, that are capable of influencing the acidity of the refractory oxide will be referred to hereinafter as "reactive metals".

The invention relates in particular to a process for the hydroisomerization of petroleum waxes, wherein said waxes are contacted with hydrogen at hydroisomerization conditions using a catalyst as used in the process discussed above.

The present invention further relates to a process for the preparation of modified refractory oxides which comprises impregnating refractory oxides or mixtures thereof with a solution comprising a hydrocarbyl ammonium metallate or with at least two solutions comprising, respectively, one or more metal compounds and a hydrocarbyl ammonium hydroxide, which metal compounds are of Group 2a, 3a, 4a and/or 4b of the Periodic Table of Elements, capable of influencing the acidity of the refractory oxide.

Refractory oxides modified according to the present invention are preferably applied as starting materials for the preparation of catalysts which are used in particular in catalytic hydroconversion processes such as the (partial) dearomatization of kerosene and the hydroisomerization of petroleum waxes.

It appears that reactive metals present in refractory oxide particles modified according to the process according to the present invention are bound to a rather large extent to the surface of the particles in mono- or multi-molecular layers. This is quite distinct from known catalyst particles obtained by using well-known stabilizing methods for silica sols which comprise the treatment of such sols with very small amounts of a solution of a metallate; such catalysts appear to have metals or metal moieties throughout the body of the particles.

Without wishing to be bound to any particular theory, it is thought that the presence of reactive metals on the surface of catalyst (support) particles has an influence on their acidity, whilst maintaining and possibly improving their surface area and/or pore volume. For refractory oxides such as silica, which apparently lack sufficient acidity for application as catalyst support in processes where catalysts with moderate acidity are preferred (e.g. hydrogenation of kerosene), modification according to the process according to the invention provides a marked improvement in catalytic performance of such refractory oxides.

Substantially non-crystalline refractory oxide particles which have a surface area of 100—600 m²/g are suitably used in the process according to the invention; preferred is a surface area of 200—500 m²/g.

Refractory oxides which can be suitably used as starting materials in the preparation process according to the present invention comprise silica, alumina, magnesia, zirconia, titania, chromia, boria or

2

mixtures thereof such as silica-alumina, silica-magnesia, alumina-magnesia and/or silica-zirconia. Preference is given to silica, in particular to silica with a pore volume of at least 0.5 ml/g from which excellent hydroconversion catalysts can be prepared.

Small amounts of water may be tolerated in the refractory oxides used as starting material in the preparation process according to the present invention. For instance, for silica-comprising particles this amount of water may be up to 12 %w, calculated on total weight.

Modified refractory oxide particles prepared according to the process of the invention generally exhibit a good resistance against crushing which is advantageous when these particles are used in a catalyst bed which has a substantial height (which may be 15 m or more in an upright reactor) or when a second layer of catalyst particles is placed upon this catalyst bed. Generally the modified refractory oxide particles have a bulk crushing strength (BCS) of 1—4 MPa and a side crushing strength (SCS) of more than 40 N; preferably the BCS is 1.5—4 MPa and the SCS is 50—200 N.

Catalyst beds are often covered at their inlet by materials which are inert to the reaction, in order to facilitate even distribution of the feedstock, that is, to prevent or reduce channelling through the catalyst bed(s). Because such inerts may occupy a substantial portion of the reaction zone, e.g. up to 15 to 20% or more of the reaction zone volume, their presence adds to the capital expenditure of a catalytic hydroconversion process both for the reactor(s) and for the costs of the inerts which do not contribute in any significant manner to the desired conversion of the feedstock.

The presence of layers of inert material can be avoided in hydroconversion reactors when the catalyst employed therein is also capable of properly distributing the feedstock over the catalyst bed(s). Catalysts containing modified refractory oxides prepared according to the process of the present invention, and in particular substantially spherical particles, are eminently suitable for this purpose.

The use of spherical particles, which moreover have a high abrasion strength, results not only in improved flow distribution of feedstock but also in a reduced pressure drop over the catalyst bed(s), compared with the use of modified particles of a different shape. The term "spherical" as used herein refers to particles having both a true rounded shape and those generally spheroidal particles which do not pass perfectly rounded configurations.

Procedures for preparing these particles are known in the art. For instance, silica spheres can be prepared by a method comprising the initial preparation of a silica hydrogel by mixing an aqueous solution of an alkalimetal silicate with an aqueous solution of an acid, converting the hydrosol obtained into droplet form and gelling the droplets in a liquid which is not miscible with water. Optionally, the hydrogel obtained is then converted into a xerogel by reducing the alkalimetal content of the spherical silica hydrogel particles, followed by drying and calcining.

Generally, use is made of refractory oxides comprising particles of which the smallest size is of from 0.1—30 mm. Beds or refractory oxide catalyst particles of less than 0.1 mm tend to plug more readily and are less effective in distributing feed across the initial contact layer of catalyst than beds of larger particles, whereas the use of particles of which the smallest size is above 30 mm results in catalysts having significantly lower activity per volume unit. Preferably use is made of particles of which the smallest size is from 0.5—10 mm. When the particles used are spheres the term "smallest size" refers, of course, to their diameters. Otherwise, e.g., for dumb-bell shaped particles, this term refers to the smallest distance from one wall to an opposite wall of a particle.

Modification of refractory oxides with reactive metal compounds can be suitably carried out either by impregnating the refractory oxides with a solution comprising a hydrocarbyl ammonium metallate or with at least two solutions comprising, respectively, one or more metal compounds and a hydrocarbyl ammonium hydroxide. Preference is given to the use of a hydrocarbyl ammonium moiety comprising one or more alkyl groups with 1—4 carbon atoms, most preferably a tetramethyl ammonium moiety.

Suitable reactive metal moieties comprise magnesium, aluminium, titanium and zirconium, which can be used separately or in combinations. When use is made of silica-comprising refractory oxides, aluminium is the preferred reactive metal moiety which is very suitably applied by impregnating the refractory oxide with a solution comprising tetramethyl ammonium aluminate. Other reactive metal moieties, such as zirconium and magnesium are preferably applied to the refractory oxides by impregnation with a solution comprising the nitrate(s) of the reactive metal(s) and subsequently with a solution comprising at least one hydrocarbyl ammonium hydroxide, preferably in such manner that the weight ratio of hydrocarbyl ammonium hydroxide to the appropriate refractory oxide(s) is from 0.01 to 1, preferably from 0.1 to 0.5.

When using a hydrocarbyl ammonium metallate, the amount thereof is calculated on basis of the equivalent amount of hydrocarbyl ammonium hydroxide.

Also metal alkoxides such as titanium alkoxide (in particular titanium (IV) ethoxide) can be suitably applied to incorporate a metal into the refractory oxide(s).

The impregnation of the refractory oxides may be carried out in one or more stages with one or more solutions by any method known in the art, e.g., dipping, soaking ("wet") or "dry" impregnation, in which last method the volume of the impregnating solution used is about equal to the total pore volume of the refractory oxide particles to be impregnated. The impregnation treatment is suitably carried out at temperatures up to the boiling point of the solvent, preferably at temperatures of from 60—90°C using aqueous solutions.

The modified refractory oxides thus prepared suitably comprise 0.1—10 %w, and preferably 1—7 %w, of reactive metals, calculated as metal oxides and based on the total weight of the modified refractory oxides. It is thought that larger amounts of reactive metals could adversely affect the strength of the modified refractory oxide particles thus obtained.

The modified refractory oxides are suitably subjected to a heat treatment after the (final) impregnation step or, alternatively, after more than one or after each impregnation step. The heat treatments comprise drying, suitably at temperatures of from 50—250°C, and/or calcining steps, the latter being suitably carried out in air under atmospheric pressure at temperatures of from 250—1000°C. With a two-step impregnation process, using for instance metal nitrates in the first step, it is preferred to calcine the metal-impregnated refractory oxides firstly at temperatures of from 250—400°C for 1—24 hours before carrying out the second impregnation step with a hydrocarbyl ammonium hydroxide. After the second impregnation step the modified refractory oxides are preferably subjected to a calcination treatment in air at temperatures of from 400—800°C for 1—24 hours, in order to achieve the desired catalytic activity of the refractory oxides.

At least one hydrogenating metal or metal compound should be loaded on the modified refractory oxides prepared according to the present invention, preferably after a heat treatment. Preferred metal compounds comprise nitrates, oxides and/or sulphides. Of particular interest are catalytic composites comprising one or more metals of the groups 6b and/or 8 of the Periodic Table of the Elements, and/or compounds thereof, such as molybdenum, tungsten, chromium, iron, nickel, cobalt, platinum, palladium, ruthenium, rhodium, osmium and iridium; the modified refractory oxides may be loaded with these metals or their compounds by means of any process for the preparation of catalysts known in the art, such as impregnation, ion-exchange or precipitation.

Thus, modified refractory oxides prepared in accordance with the process of the present invention can be utilized advantageously as catalysts or components thereof in a variety of hydrocarbon conversion processes preferably in the presence of hydrogen. For instance, modified refractory oxides loaded with 0.1—2% by weight of one or more noble metals of Group 8, calculated on the weight of the modified refractory oxides, are very suitable for use in processes where bifunctional catalysts (i.e. catalysts wherein acidity and hydrogenation activity have been balanced carefully) are needed.

Preferred catalysts for use in hydrocarbon conversion processes according to the present invention such as the (partial) dearomatization of kerosine or the hydroisomerization of petroleum waxes comprise modified refractory oxides which have been loaded with from 0.1 to 2% by weight of one or more noble metals of Group 8, in particular platinum, calculated on the weight of the treated refractory oxides.

Sulphur-containing compounds may be present in amounts of up to 100 ppmw in the hydrocarbons to be converted (e.g. kerosene or slack wax), without causing unacceptable loss of hydrogenation activity, when using the above-described catalysts. Also small amount of nitrogen-containing compounds may be tolerated.

A preferred catalyst for hydrocarbon conversion processes according to the present invention comprises platinum and/or palladium incorporated in silica spheres which have been impregnated with tetramethyl ammonium aluminate.

Prior to their use in hydroconversion processes the catalysts are preferably activated by treatment with hydrogen at a temperature from 150°C to 700°C, in particular for at least several hours at a temperature from 300°C to 500°C and at at least atmospheric pressure.

In general the reaction conditions applied in hydroconversion processes, such as the (partial) dearomatization of kerosene, comprise a temperature from 100—600°C, preferably 200—400°C; a pressure from 1—300 bar, preferably 10—150 bar; a hydrogen feed rate from 50—2500 Nl/kg feed, preferably 100—1000 Nl/kg feed; and a space velocity from 0.1—10 kg feed/l catalyst/hour, preferably 1—6 kg feed/l catalyst/hour. A reaction temperature for this type of hydroconversion processes exceeding 600°C is less desirable as it might cause considerable shortening of the catalyst life by increased formation of carbonaceous deposits thereon.

Petroleum waxes contain normal and slightly branched paraffins of high molecular weight which solidify at ambient temperature. These waxes are usually obtained from the heavier fractions of crude oils, suitably as a by-product during the preparation of lubricating oils. The wax obtained during the refining of various lubricating oil fractions is designated as distillate or residual slack wax, depending on the type of lubricating oil fraction from which it is derived by dewaxing.

The dewaxing treatment can be carried out in any manner known in the art, e.g. by means of a solvent. This latter process provides for dissolving a wax-containing feedstock in an organic solvent and gradually chilling this feedstock to cause crystallization of the wax, which is subsequently separated from the solvent/oil mixture by filtration. Suitable solvents for this treatment are liquefied propane and butane, pentane, benzene, toluene, acetone, methyl ethyl ketone and mixtures of one or more aromatic compounds with methyl ethyl ketone. Dewaxing is preferably carried out using a mixture of 40—60 parts by volume of methyl ethyl ketone and 60—40 parts by volume of toluene at a temperature between −10 and −30°C, the volume ratio of the solvent and oil being between 1 and 10.

A preferred feed for the hydroisomerization process according to the invention consists of slack waxes obtained as by-products in the preparation of lubricating oils by hydrocracking. From the lubricating oil fractions obtained by hydrocracking such as a vacuum distillate, a deasphalted oil or a slack wax, lubricating oils are prepared by removing slack wax from these lubricating oil fractions. If desired this slack

4

wax may be mixed with waxes obtained as by-product during conventional preparation of lubricating oils, before being applied as feed in the present process.

Slack waxes possess a very high viscosity index, normally in the range of from 140 to 200, depending, i.a. on their oil content and on the starting material from which they have been prepared. They are therefore eminently suitable for the preparation of lubricating oils with (extra) high viscosity indices, i.e. between 130 and 200, which products may serve for use as multigrade lubricating oils or as components of multigrade lubricating oils.

In general the reaction conditions applied in hydroisomerization processes comprise a temperature in the range of from 250 to 450°C, preferably of from 275 to 400°C; a pressure in the range of from 10 to 250 bar, preferably of from 50 to 150 bar; a hydrogen feed ratio in the range of from 100 to 2500 Nl/kg feed, preferably of from 200 to 2000 Nl/kg feed; and a space velocity in the range of from 0.1 to 5 kg feed/ l catalyst/hour, preferably of from 0.5 to 4 kg feed/l catalyst/hour. A reaction temperature substantially exceeding 450°C is less desirable in hydroisomerization processes as it might cause considerable shortening of the catalyst life by increased formation of carbonaceous deposits thereon.

The hydrogen to be employed in the catalytic conversion processes may be pure or in the form of hydrogen-containing gases. The gases employed should preferably contain more than 50% by volume of hydrogen. Very suitable are, for example, hydrogen-containing gases obtained in the catalytic reforming or steam-reforming of gasoline fractions, and mixtures of hydrogen and light hydrocarbons. Any excess of hydrogen-containing gas is advantageously recycled, possibly after the previous removal of undesired components therefrom.

The invention is illustrated by the following Examples.

Example 1
Different refractory oxides were prepared as follows.

A) Silica spheres with a diameter of 1.5—2 mm, a pore volume of 0.64 ml/g and a specific surface area of 257 m²/g were pre-dried at 200°C for 2 hours. An aluminium nitrate-containing solution was prepared by dissolving 71 g of $Al(NO_3)_3$ in 50 ml of water, and was subsequently used to impregnate 70 g of the pre-dried silica spheres for 1 hour at ambient temperature. After evaporation of water for 1 hour at 60°C, the impregnated silica spheres were dried in air for 2 hours at a temperature of 150°C and were subsequently calcined in air at 500°C for 2 hours.

B) A quantity of 100 g of pre-dried silica spheres with a pore volume of 0.74 ml/g and a specific surface area of 294 m²/g was impregnated with an aqueous solution of tetramethyl ammonium aluminate obtained by mixing an aqueous solution of 24 g of aluminium chloride with 388 ml of tetramethyl ammonium hydroxide (10 %v) in a nitrogen atmosphere. The impregnation was carried out at a temperature of 70°C for 2 hours in a nitrogen atmosphere and subsequently for a further 16 hours at ambient temperature. The resulting modified silica spheres were firstly dried at 100°C for 1 hour, then at 200°C for 3 hours and subsequently calcined in air at 600°C for 3 hours. The calcined spheres obtained contained 5.1 %w alumina, (based on the total weight of the spheres); the pore volume was 0.65 ml/g and the specific surface area 346 m²/g. The modified silica-comprising spheres prepared in accordance with the invention thus show a significant increase in surface area, compared with the silica spheres used as starting material.

E) Silica spheres with a diameter of 1.5—2 mm, a pore volume of 1.48 ml/g and a specific surface area of 320 m²/g were pre-dried for 2 hours at 200°C. A magnesium nitrate containing solution was prepared by dissolving 95.4 g of magnesium nitrate in 126 ml of water at ambient temperature and subsequently used to inpregnate 35 g of the pre-dried silica spheres for 1 hour at ambient temperature. After evaporation of water for 1 hour at 60°C, the impregnated silica spheres were dried in air for 2 hours at a temperature of 150°C and were subsequently calcined in air at 500°C for 2 hours. The calcined spheres contained 22 %w magnesia (based on the total weight of the spheres).

F) A quantity of 50 g of pre-dried silica spheres having a pore volume of 0.74 ml/g and a specific surface area of 294 m²/g was impregnated with a solution of 136.3 g of magnesium nitrate in 125 ml of water for 1 hour at ambient temperature. After evaporation of water the product was dried for 2 hours at 250°C and thereafter calcined for 2 hours at 500°C. The spheres were then impregnated with 50 ml of tetramethyl ammonium hydroxide (10 %v). The impregnated spheres were kept at 110°C for 2 hours, then 2 hours at 200°C and 1 hour at 270°C during the drying stage. They were finally calcined for 3 hours at 700°C.

Example 2
On basis of the refractory oxides of Example 1 a number of noble metal-containing catalysts was prepared.

Preparation of catalyst A'
A quantity of 78 g of treated silica spheres as prepared under A of Example 1 was impregnated with a solution of 1.22 g of platinum nitrate in 100 ml of water at ambient temperature for 30 minutes. After evaporation of water the product was dried at 150°C and subsequently calcined in air at 500°C for 2 hours. The resultant catalyst (A') contains 0.8% by weight of platinum, calculated on the weight of the modified silica spheres.

5

**Preparation of catalyst B'**

A quantity of 35 g of modified silica spheres as prepared under B of Example 1 was co-impregnated with 45 ml of an aqueous solution comprising 281 mg of $H_2PtCl_6$ . $6H_2O$, 299 mg of $PdCl_2$ and 2.4 ml HCl (38 %v), whereafter water was evaporated and the product was dried at 120°C and subsequently calcined in air at 500°C for 3 hours. The resultant catalyst (B') contains 0.31 %w of platinum and 0.50 %w of palladium, both calculated on the weight of the modified silica spheres as prepared under B of Example 1.

**Preparation of catalyst C'**

A quantity of 35 g of silica spheres used as starting material under A of Example 1 was impregnated in the same manner as catalyst (B'). The resultant catalyst (C') contains 0.29 %w of platinum and 0.53 %w of palladium, calculated on the weight of the silica spheres.

**Preparation of catalyst D'**

A quantity of 70 g of pre-dried silica spheres used as starting material under A of Example 1 was impregnated with a solution of 10.95 g of $Pt(NH_3)_4(OH)_2$ in 1 l of water for 48 hours after which the product was washed with water, dried at 150°C and subsequently calcined in air at 500°C for 2 hours. The resultant catalyst (D') contains 0.9% by weight of platinum, calculated on the weight of the silica spheres.

**Preparation of catalyst E'**

A quantity of 22 g pre-dried silica spheres as prepared under E of Example 1 was impregnated with a solution of 2.66 g of $Pt(NH_3)_4(OH)_2$ in 70 ml of water (containing 6.67 %w of platinum) for 1 hour after which the water was evaporated for 2 hours at 60°C and the product calcined for 2 hours at 400°C. The resultant catalyst (E') contains 0.8% by weight of platinum, calculated on the weight of the silica spheres.

**Preparation of catalyst F'**

A quantity of 50 g pre-dried silica spheres as prepared under F in Example 1 was impregnated with a solution of 6.05 g $Pt(NH_3)_4(OH)_2$ in 100 ml of water (containing 6.67 %w of platinum) for 30 minutes at ambient temperature. After evaporation of water the product was dried for 2 hours at 150°C and then calcined for 2 hours at 400°C. The resultant catalyst (F') contains 0.84% by weight of platinum, calculated on the weight of the silica spheres.

**Example 3**

Catalytic hydrogenation of kerosene.

Evaluation of the catalysts A'—D' of Example 2 was based on the results of experiments performed in trickel flow units. The kerosene feed to be hydrogenated, which was entirely or substantially in the liquid phase, was trickled downwardly co-currently with the hydrogen-containing gas through the fixed catalyst beds. The units were equipped with 100 ml reactors operated in once-through mode and contained 15 g of catalyst particles diluted with 50 g of silicium carbide particles with a diameter of 0.2 mm.

Before being used for the catalytic hydrogenation of kerosene, the catalysts A', B', C' and D' were activated by treatment with hydrogen in the hydroconversion reactor at a temperature of 380°C, a pressure of 30 bar and a hydrogen feed rate of 1200 Nl/kg feed for 16 hours.

After this activation treatment the temperature of the reactor was adjusted to the level required to obtain 80% by volume de-aromatization of the kerosene feed (further indicated as: Activity, $T_{80\%}$) with the use of, respectively, catalysts A', B', C' and D'. The results of the experiments are given in Table I hereinafter.

The kerosene used as feed contained 16.1% by volume of aromatic compounds and 12 ppmw of sulphur.

Further hydrogenation reaction conditions were:

| | |
|---|---|
| total pressure: | 30 bar |
| space velocity: | 5.0 g of kerosene/g of catalyst/hour |
| hydrogen feed rate: | 400 Nl/kg feed |

The product stream was analysed by means of refractive index measurements.

TABLE I

| Experiment No. | Catalyst | Activity, $T_{80\%}$(°C) |
|:---:|:---:|:---:|
| 1 | A' | 288 |
| 2 | B' | 248 |
| 3 | C' | ~280 (unstable) |
| 4 | D' | 307 |

From the results shown it is clear that the modification of silica with tetramethyl ammonium aluminate results in a considerably more active catalyst (B') in comparison with catalysts (A', C', D') which have not been modified by the process according to the present invention.

Evaluation of the catalysts E' and F' of Example 2 was carried out in the same manner as described for catalysts A'—D', but in 30 ml reactors containing 15 g of catalyst particles diluted with an equal volume of silicium carbide particles with a diameter of 0.2 mm. The kerosene feed contained 16.1% by volume of aromatic compounds, 12 ppmw of sulphur and 20 ppmw of nitrogen. The results are given in Table II.

TABLE II

| Experiment No. | Catalyst | Activity, $T_{80\%}$ (°C) |
|---|---|---|
| 5 | E' | 303 |
| 6 | F' | 275 |

From Table II it will be clear that the catalyst based on the modified refractory oxide according to the present invention (F') is considerably more active than catalyst E' which has not been modified by the preparation process according to the present invention.

Example 4

Two platinum-containing catalysts (G and H) were prepared as follows.

G) Silica spheres with a diameter of from 1.5—2 mm, a pore volume of 0.74 ml/g and a specific surface area of 294 m²/g were pre-dried at 200°C for 3 hours. A quantity of 100 g of pre-dried silica spheres was impregnated with 388 ml of an aqueous solution comprising 39 g of tetramethyl ammonium aluminate at ambient temperature for 3 hours in a nitrogen atmosphere and subsequently kept in an autoclave for a further 16 hours at ambient temperature. The treated silica spheres were dried at 200°C for 3 hours and subsequently calcined in air at 600°C for 3 hours. The calcined spheres obtained contained 5.1 %w aluminium, calculated as $Al_2O_3$ (based on the total weight of the spheres); the pore volume was 0.65 ml/g and the specific surface area 346 m²/g. A quantity of 35 g of the calcined spheres was impregnated with a solution of 373 mg of $H_2PtCl_6$ and 2.4 ml of HCl (38 %v) in 43 ml of water, after which water was evaporated at 60°C and the product was dried at 150°C and subsequently calcined in air at 500°C for 2 hours. The resultant catalyst G contains 0.4 %w of platinum, calculated on the weight of calcined, platinum-free spheres.

H) Preparation of a comparative catalyst.

A quantity of 70 g of pre-dried silica spheres, with a pore volume of 0.64 ml/g and a specific surface area of 257 m²/g was exchanged with a solution of 10.95 g of $Pt(NH_3)_4(OH)_2$ in 1 l of water for 48 hours after which the product was washed with water, dried at 150°C and subsequently calcined in air at 500°C for 2 hours. The resultant catalyst H contains 0.9% by weight of platinum, calculated on the weight of the pre-dried silica spheres.

Example 5

Catalytic hydroisomerization of slack wax.

Catalysts G and H as described in Example 4 were evaluated on the basis of the results of experiments performed in trickle flow units. The slack wax feed to be hydroisomerized, which was entirely or substantially in the liquid phase, was trickled downwardly co-currently with the hydrogen-containing gas through the fixed catalyst beds. The units were equipped with 100 ml reactors operated in once-through mode and contained 25 g of catalyst particles diluted with 73 g of silicium carbide particles with a diameter of 0.2 mm.

Before being used for the catalytic hydroisomerization of slack wax, the catalysts G and H were activated by treatment with hydrogen in the hydroisomerization reactor at a temperature of 450°C, a pressure of 140 bar and a hydrogen feed rate of 1000 Nl/kg feed for 16 hours.

After this activation treatment the temperature of the reactor was adjusted to the level required to obtain 70 %w conversion of the slack wax feed (further indicated as: Activity, $T_{70\%}$) with the use of, respectively, catalysts G and H. The slack wax used as feed contained 26 %w oil, 2.3 ppmw of sulphur and <1 ppmw of nitrogen and was obtained as by-product during the preparation of extra high viscosity index lubricating oils. The results of the experiments are given in Table III hereinafter.

Further hydroisomerization reaction conditions were:

| | |
|---|---|
| Total pressure: | 140 bar |
| Space velocity: | 2.0 kg of slack wax/l of catalyst/hour |
| Hydrogen/feed rate: | 1000 Nl/kg feed |

The product stream was analyzed by means of low resolution NMR and gas/liquid chromatography. "Selectivity, $S_{70\%}$" indicated in Table III below is defined as

7

# EP 0 145 042 B1

$$\text{oil selectivity} = \frac{\text{oil in product–oil in feed (\%w)}}{\text{wax in feed–wax in product (\%w)}} \times 100$$

at 70 %w conversion of slack wax.

TABLE III

| Experiment No. | Catalyst | Activity, $T_{70\%}$ (°C) | Selectivity, $S_{70\%}$ (%w) |
|---|---|---|---|
| 7 | G | 342 | 59 |
| 8 | H | >400 | * |

* Because of the inactivity below 400°C of catalyst H the level of 70 %w conversion of slack wax was not attained.

The viscosity indices of lubricating oils obtained by fractionating the product from Experiment No. 7 amounted to 154—156.

From the results given in Table III it is clear that catalyst G obtained by treatment of silica with tetramethyl ammonium aluminate is considerably more active than catalyst H which has been prepared in a conventional manner. Catalyst G also exhibits excellent selectivity for the preparation of high viscosity index lubricating oils.

## Claims

1. Process for the conversion of hydrocarbons, wherein hydrocarbons are contacted with hydrogen at hydroconversion conditions using a catalyst comprising at least one hydrogenating metal or compound thereof present on at least one refractory oxide which has been modified by impregnation with a metal compound, characterized in that the refractory oxide has been modified with from 0.1 to 30 %w, calculated on refractory oxide, of at least one metal compound of Group 2a, 3a, 4a and/or 4b of the Periodic Table of Elements capable of influencing the acidity of the refractory oxide, by impregnating the refractory oxide with a solution comprising a hydrocarbyl ammonium metallate or with at least two solutions comprising, respectively, one or more metal compounds and a hydrocarbyl ammonium hydroxide.

2. Process according to claim 1, characterized in that petroleum waxes are contacted with hydrogen at hydroisomerization conditions.

3. Process according to claim 1, characterized in that kerosene is contacted with hydrogen an dearomatization conditions.

4. Process according to any one of claims 1—3, characterized in that use is made of catalysts comprising modified refractory oxides containing from 0.1 to 10 %w of metal(s), calculated as Group 2a, 3a, 4a and/or 4b metal oxides and based on refractory oxides.

5. Process according to claim 4, characterized in that use is made of catalysts comprising refractory oxides treated with moieties comprising magnesium, aluminium, titanium and/or zirconium.

6. Process according to claim 2, 4 or 5, characterized in that it is carried out at a temperature in the range of from 250 to 450°C, a pressure in the range of from 10—250 bar, a space velocity in the range of from 0.1 to 5 kg feed/l catalyst/hour and a hydrogen/feed ratio in the range of from 100 to 2500 Nl $H_2$/kg feed.

7. Process for the preparation of modified refractory oxides, by impregnating the refractory oxides with at least one metal characterized in that the refractory oxides are impregnated with a solution comprising a hydrocarbyl ammonium metallate or with at least two solutions comprising, respectively, one or more metal compounds and a hydrocarbyl ammonium hydroxide, which metal compounds are of Group 2a, 3a, 4a and/or 4b of the Periodic Table of Elements, capable of influencing the acidity of the refractory oxide.

8. Process according to claim 7, characterized in that use is made of a hydrocarbyl ammonium moiety comprising one or more alkyl groups with 1—4 carbon atoms.

9. Process according to claim 7 or 8, characterized in that refractory oxides are impregnated with a solution comprising the nitrate(s) of one or more of the Group 2a, 3a, 4a and/or 4b metal(s) and subsequently with a solution comprising at least one hydrocarbyl ammonium hydroxide.

10. Process according to claim 9, characterized in that use is made of hydrocarbyl ammonium hydroxide and refractory oxides in a weight ratio of from 0.01 to 1.

11. Process according to claim 10, characterized in that refractory oxides are impregnated with a solution comprising tetramethyl ammonium aluminate.

12. Modified refractory oxides characterized in that they have been prepared according to a process as claimed in any one of claims 7—11.

13. Process for the preparation of catalysts, characterized in that modified oxides according to claim 12

8

are loaded with one or more metals of the Groups 6b and/or 8 of the Periodic Table of the Elements, and/or compounds thereof.

14. Catalysts characterized in that they have been prepared according to a process as claimed in claim 13.

**Patentansprüche**

1. Verfahren zur Umwandlung von Kohlenwasserstoffen, in welchem Kohlenwasserstoffe mit Wasserstoff unter Hydroumwandlungsbedingungen unter Verwendung eines Katalysators, der mindestens ein Hydriermetall oder eine Verbindung desselben auf mindestens einem feuerfesten Oxid, das durch Imprägnieren mit einer Metall verbindung modifiziert worden ist, enthält, dadurch gekennzeichnet, daß das feuerfeste Oxid mit 0,1 bis 30 Gewichtsprozent, bezogen auf das feuerfeste Oxid, mit mindestens einer Verbindung eines Metalls der Gruppen 2a, 3a, 4a und/oder 4b des Periodensystems der Elemente welche dazu in der Lage ist, den Säuregrad des feuerfesten Oxids zu beeinflußen, durch Imprägnieren des feuerfesten Oxids mit einer Lösung, enthaltend ein Kohlenwasserstoffammoniummetallat, oder mit mindestens zwei Lösungen jeweils enthaltend eine oder mehrere Metallverbindungen und ein Kohlenwasserstoffammoniumhydroxid, modifiziert worden ist.

2. Verfahren nach Anspruch 1, dadurch gekennzeichnet, daß Erdölwachse mit Wasserstoff bei Hydroisomerisationsbedingungen kontaktiert werden.

3. Verfahren nach Anspruch 1, dadurch gekennzeichnet, daß Kerosin mit Wasserstoff bei Entaromatisierungsbedingungen kontaktiert wird.

4. Verfahren nach einem der Ansprüche 1 bis 3, dadurch gekennzeichnet, daß Katalysatoren verwendet werden, die modifizierte feuerfeste Oxide enthalten, welche 0,1 bis 10 Gewichtsprozent an Metall(en) enthalten, berechnet als Gruppe-2a-, -3a-, -4a- und/oder -4b-Metalloxide und auf der Basis der feuerfesten Oxide.

5. Verfahren nach Anspruch 4, dadurch gekennzeichnet, daß Katalysatoren enthaltend feuerfeste Oxide, die mit Magnesium, Aluminium, Titan und/oder Zirkonium enthaltenden Verbindungen behandelt worden sind, verwendet werden.

6. Verfahren nach Anspruch 2, 4 oder 5, dadurch gekennzeichnet, daß es bei einer Temperatur im Bereich von 250 bis 450°C, einem Druck im Bereich von 10 bis 250 bar, einer Raumgeschwindigkeit im Bereich von 0,1 bis 5 kg Zuspeisung/Liter Katalysator/Stunde und einem Wasserstoff/Zuspeisungsverhältnis im Bereich von 100 bis 2500 Nl H$_2$/kg Zuspeisung durchgeführt wird.

7. Verfahren zur Herstellung von modifizierten feuerfesten Oxiden, durch Imprägnieren der feuerfesten Oxide mit mindestens einem Metall, dadurch gekennzeichnet, daß die feuerfesten Oxide mit einer ein Kohlenwasserstoffammoniummetallat enthaltenden Lösung oder mit mindestens zwei jeweils eine oder mehrere Metallverbindung(en) und ein Kohlenwasserstoffammoniumhydroxid enthaltenden Lösungen imprägniert werden, wobei die Metalle der Verbindungen der Gruppe 2a, 3a, 4a und/oder 4b des Periodensystems der Elemente angehören und den Säuregrad der feuerfesten Oxide beeinflußen können.

8. Verfahren nach Anspruch 7, dadurch gekennzeichnet, daß eine Kohlenwasserstoffammoniumgruppe mit einer oder mehreren Alkylgruppen mit 1 bis 4 Kohlenstoffatomen verwendet wird.

9. Verfahren nach Anspruch 7 oder 8, dadurch gekennzeichnet, daß feuerfeste Oxide mit einer Lösung enthaltend die Nitrate bzw. das Nitrat eines oder mehrerer Metalle der Gruppen 2a, 3a, 4a und/oder 4b und anschließend mit einer Lösung enthaltend mindestens ein Kohlenwasserstoffammoniumhydroxid imprägniert werden.

10. Verfahren nach Anspruch 9, dadurch gekennzeichnet, daß ein Kohlenwasserstoffammoniumhydroxid und feuerfeste Oxide in einem Gewichtsverhältnis von 0,01:1 bis 1:1 verwendet werden.

11. Verfahren nach Anspruch 10, dadurch gekennzeichnet, daß feuerfeste Oxide mit einer Lösung enthaltend Tetramethylammoniumaluminat imprägniert werden.

12. Modifizierte feuerfeste Oxide, dadurch gekennzeichnet daß sie gemäß dem Verfahren nach einem der Ansprüche 7 bis 11 hergestellt worden sind.

13. Verfahren zur Herstellung von Katalysatoren, dadurch gekennzeichnet, daß modifizierte Oxide nach Anspruch 12 mit einem oder mehreren Metallen der Gruppen 6b und/oder 8 des Periodensystems der Elemente und/oder Verbindungen davon beladen werden.

14. Katalysatoren, dadurch gekennzeichnet, daß sie nach einem Verfahren wie in Anspruch 13 beansprucht, hergestellt worden sind.

**Revendications**

1. Procédé de conversion d'hydrocarbures, dans lequel des hydrocarbures sont mis en contact avec de l'hydrogène dans des conditions d'hydroconversion en utilisant un catalyseur comprenant au moins un métal hydrogénant ou un composé d'un tel métal présent sur au moins un oxyde réfractaire qui a été modifié par imprégnation d'un composé de métal, caractérisé en ce que l'oxyde réfractaire a été modifié par 0,1 à 30% en poids, par rapport à l'oxyde réfractaire, d'au moins un composé de métal des groupes 2a, 3a, 4a et/ou 4b du tableau périodique des éléments capable d'influencer l'acidité de l'oxyde réfractaire, en imprégnant l'oxyde réfractaire d'une solution comprenant un métallate d'hydrocarbyl ammonium ou d'au moins deux solutions comprenant, respectivement, un ou plusieurs composés de métaux et un hydroxyde d'hydrocarbyl ammonium.

2. Procédé selon la revendication 1, caractérisé en ce que des cires de pétrole sont mises en contact avec de l'hydrogène dans des conditions d'hydro-isomérisation.

3. Procédé selon la revendication 1, caractérisé en ce que du kérosène est mis en contact avec de l'hydrogène dans des conditions de désaromatisation.

4. Procédé selon l'une quelconque des revendications 1—3, caractérisé en ce qu'on utilise des catalyseurs comprenant des oxydes réfractaires modifiés contenant de 0,1 à 10% en poids d'un ou plusieurs métaux, en calculant en oxydes de métaux des groupes 2a, 3a, 4a et/ou 4b et par rapport aux oxydes réfractaires.

5. Procédé selon la revendication 4, caractérisé en ce qu'on utilise des catalyseurs comprenant des oxydes réfractaires traités par des portions comprenant du magnésium, de l'aluminium, du titane et/ou du zirconium.

6. Procédé selon la revendication 2, 4 ou 5, caractérisé en ce qu'il est mis en oeuvre à une température comprise entre 250 et 450°C, à une pression comprise entre 10 et 250 bars, une vitesse spatiale comprise entre 0,1 et 5 kg de charge par litre de catalyseur et par heure et avec un rapport hydrogène/charge compris entre 100 et 2500 litres (TPN) et $H_2$ par kg de charge.

7. Procédé de préparation d'oxydes réfractaires modifiés en imprégnant les oxydes réfractaires d'au moins un métal, caractérisé en ce que les oxydes réfractaires sont imprégnés d'une solution comprenant un métallate d'hydrocarbyl ammonium ou d'au moins deux solutions comprenant, respectivement, un ou plusieurs composés de métaux et un hydroxyde d'hydrocarbyl ammonium, où les composés de métaux sont des composés de métaux des groupes 2a, 3a, 4a et/ou 4b du tableau périodique des éléments, capables d'influencer l'acidité de l'oxyde réfractaire.

8. Procédé selon la revendication 1, caractérisé en ce qu'on utilise une portion hydrocarbyl ammonium comprenant un ou plusieurs groupes alcoyle ayant 1—4 atomes de carbone.

9. Procédé selon la revendication 7 ou 8, caractérisé en ce que des oxydes réfractaires sont imprégnés d'une solution comprenant le ou les nitrates d'un ou plusieurs des métaux des groupes 2a, 3a, 4a et/ou 4b et ensuite d'une solution comprenant au moins un hydroxyde d'hydrocarbyl ammonium.

10. Procédé selon la revendication 9, caractérisé en ce qu'on utilise l'hydroxyde d'hydrocarbyl ammonium et les oxydes réfractaires dans un rapport en poids compris entre 0,01 et 1.

11. Procédé selon la revendication 10, caractérisé en ce que les oxydes réfractaires sont imprégnés d'une solution comprenant de l'aluminate de tétraméthyl ammonium.

12. Oxydes réfractaires modifiés caractérisés en ce qu'ils ont été préparés par un procédé selon l'une quelconque des revendications 7—11.

13. Procédé de préparation de catalyseurs, caractérisé en ce que des oxydes modifiés selon la revendication 12 sont chargés d'un ou plusieurs métaux des groupes 6b et/ou 8 du tableau périodique des éléments et/ou de composés de ces métaux.

14. Catalyseurs caractérisés en ce qu'ils ont été préparés par un procédé selon la revendication 13.